# EUROPEAN PATENT APPLICATION

(11) **EP 3 291 147 A1**
(43) Date of publication of application: **07.03.2018**
(21) Application number: 16186388.1
(22) Date of filing: 30.08.2016
(51) Int. Cl.: G06Q 10/00

(54) **SYSTEM, METHOD AND SERVER APPARATUS FOR DISTRIBUTION OF SERVICE REQUESTS ASSOCIATED WITH MAINTENANCE SERVICES REQUIRED FOR MAINTENANCE OF INDUSTRIAL ASSETS**

(71) Applicant: Hitachi, Ltd., Tokyo 100-8280 (JP)
(72) Inventor: HEYER, Steffen, 52074 Aachen (DE)
(74) Representative: MERH-IP Matias Erny Reichl Hoffmann Patentanwälte PartG mbB

(57) **Abstract**

The present invention relates to systems, methods and server apparatuses for distribution of service requests associated with maintenance services required for maintenance of industrial assets. The invention may relate to a procedure that executes, when receiving a registration request message associated with a service provider not yet indicated in the service provider management information: identifying, among a plurality of pending service requests, one or more service requests matching one or more service offers associated with maintenance services for industrial assets provided by a respective service provider; selecting, among the one or more identified service requests, one or more service requests based on whether the respective identified service request satisfies one or more selection criteria associated with the respective service provider, the one or more selection criteria being indicated in selection criteria information included in the received registration request associated with the respective service provider; and sending a corresponding service request information message indicative of the one or more selected service requests to the respective service provider.

## Description

The present disclosure relates to a system, method and server apparatus for distribution of service requests associated with maintenance services requested from industrial assets. A registration procedure (publish/subscribe procedure) is utilized to distribute service requests from industrial assets towards service providers in a targeted or filtered manner.

### Background

A (mobile) service provider (e.g. a maintenance crew in a factory or an industrial maintenance robot) can offer its service usually within a certain area of operation. Accordingly, the service provider has to become aware of valid opportunities to provide its offered services. Therefore, a service provider has to be enabled to obtain information concerning valid service requests (e.g. concerning a broken machine in a factory) within its vicinity.

EP 2223501 B1 relates to publish/subscribe networks and in particular to a method and apparatus for interconnecting discrete publish/subscribe networks. However, subscribers receive all messages that are published by a publisher without filtering and updating or adding of delivery criteria.

US 20120079044 A1 relates to the field of publish/subscribe messaging and, in particular, to adaptive content/based publish/subscribe messaging. However, subscribers merely receive messages that are published after a subscription/registration. Moreover, messages that were published before the subscription are not considered in the filtering process and consequently not sent to the subscriber.

Accordingly, improved means for informing service providers about valid service requests within their vicinity or area of operation is required.

### Summary

In view of the above, this present disclosure describes application of a server apparatus enabling a targeted assignment of service providers in accordance to service requests issued in relation to maintenance needs of corresponding industrial assets.

It is an object to propose aspects and methods for a targeted distribution of service requests that improve efficiency of maintenance service assignment and reduce response time for maintenance or repair services required at an industrial asset.

According to some embodiments, for solving the above-mentioned technical object, there is a proposed server apparatus for distribution of service requests according to claim 1 and a method for distribution of service requests according to claim 14.

Also, there is proposed a service requesting apparatus according to claim 12 communicably connectable to the server apparatus and a service provider apparatus according to claim 13 communicably connectable to the server apparatus.

Furthermore, there is proposed a computer program product according to claim 15, adapted to cause a computer or computer system to perform distribution of service requests associated with requested maintenance services. Dependent claims and the combinations of two or more dependent claims relate to exemplary and preferred embodiments.

In the most preferable aspects, the embodiments shall be applied in relation to industrial/manufacturing assets, such as industrial robots or other machinery and tools utilized in industrial manufacturing. However, it is to be noted that the aspects and embodiments may also be applied to different fields, such as maintenance service provision for machinery utilized in construction, aviation or mining operations.

In the following, support for features and aspects of the exemplary embodiments will be given, and advantages will be described. Further advantages and features may become apparent from the later more detailed description of drawings and related exemplary embodiments.

According to an aspect, a server apparatus for distribution of service requests may be provided, wherein the service requests may be associated with maintenance services required for maintenance of industrial assets.

For example, the server apparatus may be a device (server) that provides functionality, often called" services", for other programs or devices, called "clients" or "client devices". A client may be a piece of computer hardware or software that accesses a service made available by the server apparatus. In particular, the server apparatus may provide services, such as sharing data or resources among multiple clients, or perform computations for a client.

Maintenance services may, for example, comprise maintenance, repair and overhaul operations. In particular, maintenance services may relate to fixing any sort of mechanical, optical and/or electrical device, when it becomes out of order or broken (in particular, devices operated in an industrial manufacturing framework, e.g. a factory). Moreover, maintenance service or maintenance in general may comprise actions, which are necessary in order to keep a device in working order or to prevent future malfunction.

Industrial assets may, for example, relate to any kind of mechanical, optical and/or electrical and electronic machinery, tool or apparatus utilized in industrial manufacturing (industrial production). In particular, industrial manufacturing may be understood as the production of merchandise for use or sale using labor and machines, tools, chemical and biological processing. In particular, industrial assets may refer to semi-automatic machinery operating in interplay with human operators or completely automatic or autonomously operating machinery such as industrial robots.

Accordingly, service requests may, for example, comprise inquiries/messages originating from or being associated with an industrial assets, comprising information relating to a detected problem, disturbance or malfunction at the industrial asset. An underlying objective of an issued service request may be handing or resolving of the indicated problem, disturbance or malfunction.

Preferably, the server apparatus may be configured to maintain service request management information indicative of a plurality of pending service requests, wherein each pending service request may request a respective maintenance service required at a respective industrial asset. Preferably, each pending service request requesting a respective maintenance service required at a respective industrial asset is based on a service request message previously received at the server apparatus.

Service request management information may, for example, correspond to information associated with the plurality of pending service requests. In particular, service request management information may refer to information indicative of the required service at the industrial asset (e.g. nature of malfunction and/or corresponding countermeasures), information relating to type and/or model of the particular industrial asset, location of the respective industrial asset and/or identification number of the respective industrial asset. Pending service request may refer to outstanding, unfinished or un-answered service requests.

Accordingly, a service request message may be issued by an industrial asset or a device associated with the industrial asset, comprising specifying information concerning, for example, a detected problem, disturbance or malfunction of the respective industrial asset.

In particular, a device associated with the industrial asset may refer to a (client) device communicably connectable with the industrial asset and the server apparatus, respectively and configured to comprise and convey information indicative of detected maintenance needs (service requests) of the respective industrial asset. For example, a (client) device associated with the industrial asset may refer to a mobile computation device (e.g. tablet computer). Accordingly, information relating to the respective industrial asset may be accessible via such a computation device. Alternatively, a device associated with the industrial asset may refer to a computing device comprised by or arranged at the industrial asset and configured to enable conveying information indicative of a (maintenance) service request.

In other words, multiple individual industrial assets or devices that are associated with the respective industrial asset, may issue one or more service requests to the server apparatus. At the server apparatus, service request management information may be maintained or managed that may correspond to the entirety of pending service requests stemming from a possible variety of industrial assets.

This provides the advantage that information relating to a detected problem or malfunction of a variety of industrial assets, can be collected and be made centrally accessible by the server apparatus. Accordingly, a plurality of industrial assets can issue messages relating to problems and/or malfunctions to one central entity, which facilitates access to the provided information and improves data traffic efficiency.

Preferably, the server apparatus may further be configured to maintain server provider management information indicative of a plurality of registered service providers. Preferably, each service provider is providing one or more service offers associated with maintenance services for industrial assets.

A service provider may be an entity offering or providing services generally being associated with maintenance services for industrial assets. For example, a service provider may be an industrial repair robot comprising a specified skill set, which enables the industrial repair robot to repair or resolve detected malfunctions of industrial assets matching the specified skill set of the industrial repair robot. Alternatively, a service provider may be a maintenance crew in a factory, that is assigned to specified repair or maintenance duties of machinery comprised on the factory site.

A registered service provider may refer to a service provider that provides or has provided information to the server apparatus indicating, for example, individual identification (ID), location and/or an offered skill set relating to maintenance of industrial assets. Server provider management information may refer to the entirety of information supplied by a plurality of registered service providers.

This provides the advantage that information relating to a wide range of skill sets provided by a plurality of service providers can be "probed" or "monitored" in a central manner. Accordingly, matching between a required maintenance service of an industrial asset and an offered maintenance service of a respective service provider can be facilitated.

Preferably, upon or when receiving a registration request message associated with a service provider not yet indicated in the service provider management information, the server apparatus may be further configured to identify, among the plurality of pending service requests, one or more service requests matching one or more service offers associated with maintenance services for industrial assets provided by the respective service provider.

A registration request message may, for example, refer to a message arriving at the service apparatus issued by a respective service provider, indicating enrollment or registration (subscription) at the server apparatus. The registration request message may, for example, comprise information relating to identification (ID), offered service skills and/or location of the respective service provider.

Identification of one or more service requests matching one or more service offers that are associated with maintenance services for a respective industrial asset provided by a respective service provider may be based upon a comparison of information comprised in the service provider management information and the service request management information, respectively. In other words, the server apparatus may identify one or more service requests and a matching service offer by filtering and comparing information indicated by the service request management information and the service provider management information, respectively.

This provides the advantage that a filtering/matching of a service request and a respective service offer can be performed centrally at the server apparatus. Accordingly, information processing is facilitated and efficiency of finding a matching service offer corresponding to a particular service request is improved. Furthermore, efficiency of data traffic can be enhanced.

Preferably, the server apparatus may be further configured to select, among the one or more identified service requests, one or more service requests based on whether the respective identified service request satisfies one or more selection criteria associated with the respective service provider. Preferably, the one or more selection criteria may be indicated in selection criteria information included in the received registration request associated with the respective service provider.

Selection criteria information may, for example, comprise information relating to identification of a respective service provider, and an offered skill set for maintenance of an industrial asset and/or a location or perimeter of operation associated with the service provider.

In particular, a newly registered service provider may be compared with all pending service requests comprised in the service request management information. Accordingly, every newly registered service provider may be probed or scanned for a possible match with one or more pending service requests. Hence, efficiency of matching between maintenance service request of industrial assets and service offers provided by service providers is improved.

Preferably, the server apparatus may be further configured to send a corresponding service request information message indicative of the one or more selected service requests to the respective service provider.

Preferably, a workload of the server apparatus may be dealt with by virtualizing the distribution of service request messages. Accordingly, the server apparatus may refer to a virtual machine or module, i.e. an emulation of a given computer system, providing highly targeted service request message distribution to respective service providers.

Accordingly, a service request information message corresponding to one or more service requests associated with an industrial asset can be send to one or more respective service providers in a targeted manner. In other words, only service providers fulfilling predetermined selection criteria receive respective service request information. Therefore, efficiency of data traffic and matching of service providers and corresponding service requests associated with respective industrial assets can be enhanced.

In the following, preferred aspects and exemplary embodiments are described. Unless explicitly stated that different features or aspects represent pure alternatives that cannot be combined, it is to be understood that any two or more of the following aspects and features may be combined to form for embodiments, as long as such combinations lie within the scope of the independent claim(s).

In some preferred embodiments, the server apparatus may be further configured in that the maintained service request management information may indicate, for each pending service request, location information indicative of a location of the respective industrial asset associated with the respective service request.

Preferably, the one or more selection criteria indicated in selection criteria information may include a pre-determined location condition.

Preferably, the server apparatus may be further configured to select, among the one or more identified service requests, the one or more service requests which are associated with industrial assets at locations which satisfy the predetermined location condition.

Location information of the respective industrial asset associated with the respective service request may, for example, refer to geolocation information of the industrial asset. Geolocation is the identification of real-world geographic location of an object. Geolocation of an industrial asset may be obtained utilizing positioning systems such as global positioning systems (GPS). However, other means for obtaining a position of a respective industrial asset may be utilized.

A predetermined location condition comprised in the selection criteria information may, for example, refer to a specific perimeter or distance in respect to the location of the industrial asset. Moreover, a specific area around the location of the industrial assets may also be classified as predetermined location condition. Furthermore, a predefined area of operation (operation perimeter) associated with a respective service provider may refer to a predetermined location condition. Accordingly, upon determination that the respective industrial assets is located within the operation perimeter of the service provider, the selection process performed by the server apparatus may be performed in relation to the operation perimeter of the respective service provider.

Consequently, the server apparatus may then select only those service requests that are in accordance with the predetermined location condition. For example, it may be specified that only service providers within a specified perimeter or area around the respective industrial asset may be enabled to receive the one or more identified service requests. As already indicated above, alternatively it may be specified that only service providers may be enabled to receive the one or more identified service requests that comprise the respective industrial asset within their predefined operation perimeter.

This provides the advantage that efficiency of a matching procedure of an industrial asset in need of maintenance with a respective service provider can be improved. In particular, a matching of a respective service request with a service offer does not have to take into account the entirety of service offers provided by a plurality of service providers but only the ones meeting the predetermined location criteria. Hence, data traffic flow and processing time can be reduced. Moreover, by filtering the range of possible service providers in accordance with a location condition, travel distance and service time (i.e. the time duration from reception of a respective service request and to provision of the corresponding service at the respective industrial asset) of a respective service provider (e.g. a repair robot or a service crew) can be optimized. Therefore, energy (e.g. fuel consumption during traveling of the service provider towards the respective industrial asset) and labor costs (optimization/minimization of traveling time) can be reduced.

In some preferred embodiments the server apparatus may be configured that when receiving the registration request message associated with the service provider is not yet indicated in the service provider management information, the server apparatus may further be configured to update the maintained service provider management information to additionally indicate the respective service provider.

In other words, upon registration (subscription) of a previously unregistered service provider (i.e. when the server apparatus receives a new registration request message from a previously unregistered service provider) the service apparatus may be configured to update the maintained service provider management information (i.e. the information comprising the entirety of data relating to already registered service providers) to additionally indicate the newly registered service provider. Hence, information relating to the newly registered service provider is added to the service provider management information maintained at the service apparatus. In yet other words, the maintained service provider management information is updated with information relating to the newly registered service provider.

This provides the advantage that upon registration, a newly registered service provider is immediately available for the matching process with pending service requests. Hence, a plurality of newly registered service providers can easily be automatically processed and considered within a respective matching process.

In some preferred embodiments the server apparatus may be further configured in that, when receiving an update request message associated with a registered service provider, the server apparatus may be further configured to update the maintained service provider management information. Preferably, updating of the maintained service provider management information is based on update information indicated in the received update request message.

An update request message may, for example, refer to a message issued by a respective registered (subscribed) service provider, indicating that one or more of the selection criteria associated with the service provider has changed. For example, the location or the operational readiness of the service provider may have changed. Moreover, information relating to a change of the selection criteria may be comprised in the update request message as update information.

This provides the advantage that the service provider management information of the server apparatus can continuously be updated/refreshed. Consequently, this improves efficiency of the matching process between a service requests relating to maintenance of an industrial asset and a corresponding service offer provided by a respective service provider.

In some preferred embodiments, the server apparatus may be further configured in that the update information indicated in the received update request message may include at least one of an update of the one or more service offers provided by the respective service provider, and an update of the one or more selection criteria associated with the respective service provider.

Accordingly, the update information may comprise an indication that the one or more service offers of the respective service provider has changed. For example, the specific maintenance skill set offered by the respective service provider may have changed to another area of application. For example, a respective service provider may correspond to an industrial robot performing maintenance operations involving, for example, welding activities. However, the industrial robot may also comprise other maintenance skills such as, for example, laser cutting. Accordingly, upon a change of its current maintenance services from, for example, welding to laser cutting activities the information relating to the industrial robots provided service offers can be updated via an update request message sent to the server apparatus. Alternatively, a maintenance crew operating on a factory side and assigned with a specific set of maintenance duties may be directed towards another regime of maintenance duties. Accordingly, such a maintenance duty change can be indicated in an update request message issued by, for example, a client device (e.g. mobile computing device such as a tablet computer) associated with the maintenance crew.

Moreover, a change of the one or more selection criteria associated with the respective service provider may also be updated upon reception of an update request message at the server apparatus. For example, an industrial robot or a maintenance crew operating on a factory side may undergo a change of their geographic position. Accordingly, such change and/or the newly acquired position may be indicated in the update request message.

This provides the advantage that information relating to one or more service offers and/or one or more selection criteria of a respective service provider can be continuously updated. Accordingly, efficiency and quality of matching between a service request and a corresponding service offer can be improved.

In some preferred embodiments, the server apparatus may be further configured in that, when receiving a registration cancellation request message that is associated with a registered service provider, the server apparatus may be further configured to cancel the registration of the respective service provider and to update the maintained service provider management information. Alternatively, the server apparatus may be configured to only update the maintained service provider management information.

Preferably, cancellation of the registration may include removing information associated with the respective service provider and indicating that the registration of the respective service provider is canceled. Alternatively, cancellation of the registration may only include indicating that the registration of the respective service provider is canceled.

A registration canceling request message may, for example, refer to a message issued by a registered service provider (or a device associated with a registered service provider such as a mobile computing device) indicating an un-registering (unsubscribing or cancellation of registration) of the respective registered service provider to the service apparatus. Such an un-registering process may, for example, comprise a complete removal of the information that is associated with the respective service provider at the service apparatus. Alternatively, un-registering may merely comprise flagging that the respective service provider is temporarily not available for the matching process performed by the server apparatus. The service provider management information comprised at the service apparatus may be updated accordingly.

This provides the advantage that upon un-registering (unsubscribing) or canceling of the registration (subscription), service providers, which are not any longer (or at least not for a certain duration) available will not further be considered for the matching process performed at the server apparatus. Accordingly, data traffic can be optimized and efficiency of the matching process is enhanced.

In some preferred embodiments, the server apparatus may be further configured in that, when receiving a service request message indicative of a new service request requesting a respective maintenance service required at a respective industrial asset, the service apparatus may be configured to identify, among the plurality of registered service providers, one or more service providers, which provide a respective service offer matching the new service request.

Preferably, the server apparatus may be configured to select, among the one or more identified service providers, one or more service providers based on whether the new service request satisfies one or more selection criteria associated with the respective service provider.

Preferably, the server apparatus may further be configured to send a corresponding service request information message indicative of the new service request to each of the selected service providers.

A service request information message send from the server apparatus to respective one or more selected service providers comprises information relating to a new service request. For example, when an industrial asset detects, for example, a malfunction or generally, a need to receive maintenance service, a service request message is sent to the server apparatus. Upon reception of the newly issued service request associated with the industrial asset, the server apparatus performs identification and selection of one or more service providers matching the newly issued service request. Subsequently, the server apparatus sends a message (service request information message) to the one or more selected service providers, providing them with information concerning the new service request of the industrial asset.

This provides the advantage that newly issued service requests of respective industrial assets can be automatically forwarded/directed to matching service providers. Hence, distribution of newly issued service request can be directed efficiently to the one or more service providers best suited for the requested maintenance service.

In some preferred embodiments, the server apparatus may be further configured in that the received service request message may indicate location information, which may be indicative of a location of the respective industrial asset associated with the new service request. Preferably, the one or more selection criteria indicated in selection criteria information may include, for each of the registered service providers, a respective predetermined location condition. Preferably, the server apparatus may be configured to select, among the one or more identified service providers, the one or more service providers for which a location of the industrial asset associated with the new service request satisfies the respective predetermined location condition.

Location information indicative of a location of the respective industrial asset may, for example, be indicated by GPS coordinates (latitude and longitude). A respective predetermined location condition may, for example, refer to a specified distance or perimeter in respect to the position/location of the industrial asset or an operational area of a respective service provider indicated by an operational perimeter.

Accordingly, the server apparatus may select, among the one or more identified service providers, the one or more service providers that fulfill the respective predetermined location condition. For example, only service providers located within the specified distance or service providers, wherein the industrial assets is located within their respective operational parameters, may be selected. Accordingly, service providers may, for example, comprise means to determine their current location and providing their respective location information to the server apparatus. For example, the service providers may comprise location determination means such as global positioning systems (GPS). An operational perimeter of a service provider can be set utilizing predefined parameters.

This provides the advantage that a precise adjustment/filtering of eligible service providers can be performed in correspondence to distance between an industrial asset issuing a service request and services offering service providers. Accordingly, traveling time (i.e. the time period until the arrival of the respective service provider at the industrial asset) and energy consumption (e.g. fuel costs) can be reduced.

In some preferred embodiments, the server apparatus may be further configured in that, when receiving the service request message, which is indicative of the new service request, the server apparatus may further be configured to update the maintained service request management information to additionally indicate the new service request.

Accordingly, the service request management information can be continuously updated. Hence, the server apparatus can utilize updated service request management information (publication streams) in order to probe for potential matching service providers. Consequently, available resources (i.e. available service providers) can be utilized more efficiently.

In some preferred embodiments, the server apparatus may be further configured in that, when receiving an update request message associated with a pending service request, the server apparatus may be further configured to update the maintained service request management information. Preferably, updating may be based on update information indicated in the received update request message.

An update request message may, for example, refer to a message issued by an industrial asset or a device associated with the industrial asset corresponding to a pending service request. Furthermore, the update request message may comprise information causing the server apparatus to update the maintained service request management information. Moreover, the aforementioned updating may be based on specific update information also comprised or indicated in the received update request message.

In some preferred embodiments, the server apparatus may be further configured in that the update information indicated in the received update request message may include an update of location information indicative of the location of the respective industrial asset associated with the respective pending service request.

For example, upon change of location of the industrial asset associated with the pending service request, information relating to the location change may be included in the update information. Location determination of the industrial asset may, for example, be performed via a GPS system comprised by the respective industrial asset. Alternatively, any other means to determine a geolocation may be employed.

Accordingly, the server apparatus can perform a matching process between the pending service request and potential service providers in view of the newly obtained information relating to a location/position change of the industrial asset.

This provides the advantage that matching between an industrial assets that issued a specific service request and service offers provided by service providers can be performed in view of continuously updated information, in particular updated location information. Accordingly, efficiency of targeted distribution of service requests from industrial assets towards service providers can be improved.

In some preferred embodiments, the server apparatus may be further configured in that, when receiving a service request termination message associated with a pending service request, the service apparatus is further configured to terminate the respective service request and to update the maintained service request management information. Alternatively only the maintained service request management information may be updated. Preferably, terminating of the respective service request and/or updating of the maintained service request management information may include removing of information associated with the respective service request from the maintained service request management information and indicating that the respective service request is expired. Alternatively, it may only be indicated that the respective service request is expired.

A service request termination message may, for example, be issued by an industrial asset (or a device associated with the industrial asset) with a pending service request. The service request termination message may comprise information causing the server apparatus to terminate the respective service request and to update the maintained service request management function. Alternatively, the maintained service request management information may merely be updated.

Consequently, when it is determined by an industrial asset (or an entity associated with the industrial asset) that a maintenance service corresponding to a pending service request is no longer necessary, the particular pending service request may be canceled. Accordingly, services provided by service providers can be distributed or redistributed alternatively. Therefore, managing of resources can be improved.

In some preferred embodiments, the server apparatus may be further configured in that the received service request message may be indicative of an expiry time of the respective service request and the maintained service request management information may indicate a respective expiry time for each pending service request. Alternatively, only the maintained service request management information may indicate a respective expiry time for each pending service request. Preferably, the service apparatus may further be configured to remove information associated with pending service requests from the maintained service request management information at their respective expiry times and to terminate service requests at their respective expiry times. Alternatively only service requests at their respective expiry times may be terminated. Preferably, the server apparatus may be configured to send service request termination messages associated with expired service requests to a client device that is associated with the respective associated industrial assets.

An expiry time of a respective service request may, for example, refer to a predetermined duration for which the respective pending service request or the maintained service request management information is valid or should be uphold. Accordingly, a removal of information associated with pending service requests from the maintained service request management information at their respective expiry times and/or termination of service requests at their respective expiry times enables efficiency improvement of data processing in the server apparatus.

A service request termination message may, for example, be indicative of termination of a respective pending service request. The service request termination message sent by the server apparatus may be received by a client device that is associated with the respective industrial asset (e.g. transceiver associated with a computing device comprised by the industrial asset).

This facilitates keeping track of validity of pending service requests. Consequently, planning of maintenance work can be improved.

According to another aspect, a service requesting apparatus may be provided. Preferably, the service requesting apparatus is configured to be communicably connectable to the server apparatus. Preferably, the service requesting apparatus may be further configured to determine whether a maintenance services is required at an industrial asset among one or more industrial assets associated with the service requesting apparatus. Preferably, the service requesting apparatus may be configured to send a service request message to the server apparatus, when it is determined that a respective maintenance service is required at a respective industrial asset associated with the service requesting apparatus. Preferably, the service request message may be indicative of a service request requesting the respective maintenance service required at the respective industrial asset. Preferably, the service request message may include at least one of service information indicative of the required maintenance service, location information indicative of a location associated with the respective industrial asset, type information indicative of a type of the respective industrial asset, identification information indicative of an identification number of the respective industrial asset, and expiry time information indicative of an expiry time of the respective service request.

Preferably, the service requesting apparatus may further be configured to be communicably connectable to devices associated with respective server providers.

The service requesting apparatus may be associated with one or more respective industrial assets. In particular, the service requesting apparatus may comprise means capable of determining whether a maintenance service is required at the one or more associated industrial assets. Alternatively, the service requesting apparatus may be associated with means (e.g. monitoring sensors) that are capable of determining whether a maintenance service is required at the one or more associated industrial assets. Accordingly, upon determination that a respective maintenance service at a respective industrial asset is required the service requesting apparatus may send a corresponding service request message to the server apparatus. Accordingly, the service request message may comprise information that is indicative of a service request requesting the respective maintenance service that is required at the respective industrial asset. In particular, the issued service request message may include service information corresponding to the required maintenance service. Moreover, the service request message may include location information corresponding to a determined location or position of the industrial asset. In addition, the service request message may comprise type information relating to the type (model) of the respective industrial asset. Furthermore, the service request message may comprise identification information relating to an identification number (ID) of the respective industrial asset. Moreover, the service request message may comprise information relating to an expiry time of the respective service request.

Accordingly, the server apparatus can be provided with an extensive amount of information relating to necessary maintenance work to be performed at a respective industrial asset. Particularly, provision of information relating to a specific required maintenance service (e.g. particular type of malfunction), location information (geolocation) of the industrial asset, type information (e.g. specific machine model) as well as of identification number and expiry time information of the respective service request allow for a well-adjusted matching with potential service providers.

Hence, efficiency of service request distribution from industrial assets towards service providers can be performed in a highly targeted manner. Consequently, this enables an efficient resource management, i.e. a well-adjusted intermediation of service requests with offered services.

According to another aspect, a service provider apparatus may be provided. Preferably, the service provider apparatus may be communicably connectable to the service apparatus and one or more service requesting apparatuses. Preferably, the service provider apparatus may be associated with one or more service providers providing one or more service offers associated with maintenance services for industrial assets. Preferably, the service provider apparatus may be further configured to send a registration request message that is associated with one of the associated service providers to the service apparatus. Preferably, the registration request message may be indicative of one or more services provided by the respective service provider and one or more selection criteria associated with the respective service provider. Preferably, the service provider apparatus may be further configured to receive a service request information message that is indicative of one or more service requests from the server apparatus. Preferably, the service provider apparatus may be configured to send a service offer information message to the service requesting apparatuses that are associated with the one or more service requests indicated in the received request information message.

The service provider apparatus may, for example, be a client device (computing device) that is associated with one or more service providers. For example, the service provider apparatus may be a a mobile portable computer such as, for example, a tablet computer, a smart phone or personal digital assistant associated with one or more service providers. Accordingly, when the service provider is, for example, a maintenance crew on a factory side the service provider apparatus may, for example, be a mobile computer enabling information exchange with the service provider apparatus. Alternatively, when the service provider is, for example, an industrial maintenance robot, the service provider apparatus may be a computing device comprised by or attached to the maintenance robot. In particular, when comprised by a maintenance robot the service provider apparatus may be designed as computation module capable of information exchange with a server apparatus and industrial assets, respectively.

When it is determined that the service provider associated with the service provider apparatus is ready to offer services or respond to service requests, the service provider apparatus (e.g. a mobile portable computer of a maintenance crew or a computation module of a maintenance robot) issues a registration request message to the server apparatus indicating, that the associated service provider may provide one or more services. In addition, the registration request message comprises one or more selection criteria that are associated with the respective service provider. In other words, the service providing apparatus registers a respective service provider with the server apparatus. Upon reception of a service request information message from the server apparatus comprising one or more service requests associated with respective industrial assets, the service provider apparatus issues a service offer information message to a respective service requesting apparatus indicative of a respective industrial asset. In particular, the service requesting apparatus may be a device associated with the industrial asset requiring maintenance service. Moreover, the service requesting apparatus may be configured to manage service requests. For example, the service requesting apparatus may be a computing device capable of information exchange with the server apparatus and/or one or more service providers via a respective service provider apparatus.

Furthermore, in some preferred embodiments the industrial assets may be configured to provide services in reply to the received service requests issued by other respective industrial assets. In other words, the industrial assets may be configured to serve as service providers for other respective industrial assets. For example, an industrial manufacturing robot (industrial asset) utilized in industrial manufacturing may comprise additional maintenance skills directed to repair and/or overhaul of other respective industrial (manufacturing) robots. Accordingly, respective service provider units may also be configured to be utilized as manufacturing entities, i.e. industrial assets.

Accordingly, provision of service offers can be automated and service offers can be provided in a highly efficient manner. Therefore, resource management, i.e. selection of matching service providers, can be optimized and queue times (time durations between a determination of a maintenance need of an industrial asset and arrival of a service provider providing a respective maintenance service) can be decreased. Consequently, downtime of the respective industrial asset can be reduced and operational costs can be saved.

According to another aspect, a system may be provided comprising the server apparatus of the above aspects and embodiments, or combinations thereof. Preferably, the one or more service requesting apparatuses of the above aspects and embodiments, or combinations thereof may be configured to be communicably connected to the server apparatus. Preferably, the system may comprise the one or more service provider apparatuses of the above aspects and embodiments, or combinations thereof that may be configured to communicably be connected to the server apparatus and the one or more service requesting apparatuses.

Accordingly, a system can be provided which enables distribution of service requests from industrial assets towards service providers in a highly targeted manner.

According to yet another aspect a method for distribution of service requests associated with maintenance services required for maintenance of industrial assets is provided. Preferably, the method may comprise maintaining service request management information indicative of a plurality of pending service requests.

Preferably, each pending service request may request a respective maintenance service required at a respective industrial asset based on a previously received service request message.

Preferably, the method comprises maintaining service provider management information indicative of a plurality of registered service providers. Preferably, each service provider may provide one or more service offers associated with maintenance services for industrial assets.

Preferably, when receiving a registration request message associated with a service provider not yet indicated in the service provider management information, the method further may comprise identifying, among the plurality of pending service requests, one or more service requests matching one or more service offers associated with maintenance services for industrial assets provided by the respective service provider.

Preferably, the method may further comprise selecting, among the one or more identified service requests, one or more service requests based on whether the respective identified service request satisfies one or more selection criteria associated with the respective service provider.

Preferably, the one or more selection criteria may be indicated in selection criteria information that may be included in the received registration request associated with the respective service provider.

Preferably, the method may further comprise sending a corresponding service request information message indicative of the one or more selected service requests to the respective service provider.

Accordingly, only such service providers, fulfilling the one or more selection criteria (for example, when being within or entering a defined area or perimeter) are enabled to receive the respective service requests. When service providers register with the server apparatus (subscribe to a "publication streams" of service requests, i.e. service request managing information) ongoing and future service requests are checked for sending. Furthermore, the criteria for distribution are continuously checked for each service provider.
Accordingly, a method for distribution management of service requests related to industrial assets can be provided enabling a distribution of service requests from industrial assets towards respective service providers in a highly targeted manner.

According to another aspect, there may be provided a computer program product comprising computer readable program instructions stored on a computer readable medium. Preferably, when being run on a computer, the computer program may cause the computer to execute the steps of the method of the above aspects and embodiments, or combinations thereof. Preferably, causing the. computer to execute the steps of the method for distribution of service requests associated with maintenance services required for maintenance of industrial assets.

The computer readable program instructions may be provided to the processor of a general purpose computer, special purpose computer, or other programmable data processing apparatus to produce a particular machine, such that the program instructions, which execute via the processor of the computer or other programmable data processing apparatus, generate means for implementing the functions for distribution of service requests.

### Brief description of the drawings

In the following the invention will further be explained based on at least one preferential example of the invention with reference to the attached exemplary drawings, wherein:
Figure 1 exemplarily depicts a schematic illustration of an overall system for distribution of service requests;
Figure 2 depicts a block diagram of an exemplary embodiment of the server apparatus;
Figure 3 depicts a block diagram of the registration management module with registration instance module and request instant module of the server apparatus according to one exemplary embodiment;
Figure 4, depicts a block diagram of an exemplary embodiment of an industrial asset;
Figure 5 depicts a block diagram of an exemplary embodiment of a service provider;
Figure 6 depicts schematically a situation for message delivery or distribution based on geolocation

### Detailed description of drawings and preferred embodiments

In the following, preferred aspects and exemplary embodiments will be described in more detail with reference to the accompanying figures. Same or similar features in different drawings and embodiments are sometimes referred to by similar reference numerals. It is to be understood that the detailed description below relating to various preferred aspects and preferred embodiments are not to be meant as limiting the scope of the present invention.

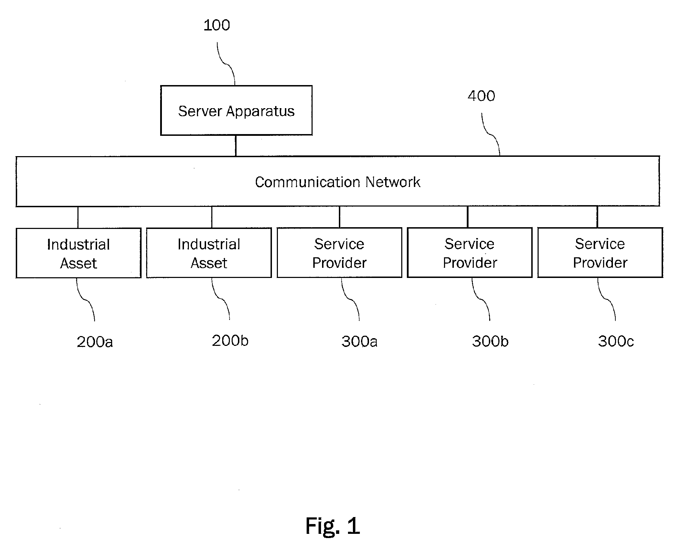

Figure 1 depicts a schematic overview of a system for distribution of service requests associated with maintenance services required for maintenance of industrial assets. In particular, the overall system comprises a central server apparatus 100 (service request broker), industrial assets 200 (200a, 200b), service provider units 300 (300a, 300b, 300c) and a communication network 400.

The server apparatus 100 manages publication of service requests issued by one or more of the industrial assets 200 and registration (subscription) of one or more service providers 300 to enable access to information relating to the issued service requests.

In particular, the server apparatus 100 provides functionality or services for other devices (industrial assets 200, service providers 300). The functionality or services can comprise sharing data or resources among the service providers 300 and/or performing computational services. Accordingly, the server apparatus provides the role of a "service request broker" or a message broker that handles the targeted distribution of messages. In other words, information relating to service requests (service request messages) issued by the one or more industrial assets 200 is stored at the server apparatus 100 and made accessible to registered (subscribed) service providers 300 in accordance with selection criteria for matching specific service requests of industrial assets 200 with services offered by service providers 300.

The one or more industrial assets 200 can comprise machinery or tools for shaping or machining metal or other rigid materials, for example, by cutting, boring, grinding, sharing or other forms of deformation. Moreover, the one or more industrial assets can also comprise means for welding (i.e. a fabrication or sculpturing that joins materials, usually metals or thermoplastics, by causing fusion), brazing and/or soldering. Furthermore, the industrial asset may comprise means for optical processing and/or manufacturing of workpieces, e.g. via lasers. For example, the industrial assets 200 can be embedded in or comprised by machinery utilized in an industrial manufacturing assembly line, e.g. a manufacturing robot. Alternatively, the industrial assets 200 can also be autonomous operating entities, such as mobile industrial robots configured to perform a variety of manufacturing tasks. The area of operation of the one or more industrial assets 200 can be within the confines of a manufacturing side such as a factory or a factory work floor.

In particular, an industrial asset 200 may be configured to determine necessity of a maintenance and/or repair service. For this purpose, the one or more industrial assets 200 can be configured to monitor their operational status. For example, the one or more industrial assets 200 can comprise a variety of sensors configured to detect an actual malfunction or the potential for malfunction due to outworn equipment. Moreover, the industrial assets 200 can further comprise means to provide information relating to possible countermeasures in case an actual malfunction or the potential for malfunction arises. This countermeasure information can be issued in correspondence with a message indicating need for service (service request message).

The one or more industrial assets 200 can be associated with a client device configured for conveying or sending service request messages to the server apparatus 100 in case an actual malfunction or the potential for a malfunction is detected. An association between one or more industrial assets 200 and a client device can comprise a communication link that is established between the industrial asset and a respective client device. The client device may further be configured to convey or relay information relating to maintenance needs of the respective industrial asset 200 to the server apparatus 100. Alternatively, the one or more industrial assets 200 can be configured to directly issue service request messages to the server apparatus 100 in case of a determined necessity.

The one or more service providers 200 can comprise a maintenance crew located on a factory side. The maintenance crew can comprise specific skill sets targeted towards maintenance, repair and overhaul of any sort of mechanical, electrical and/or optical manufacturing device or machinery on the factory side. In addition, the maintenance crew can be associated with a client device (e.g. a tablet computing device) capable of communicably connecting with the server apparatus 100, wherein the client device can be configured to provide information to the server apparatus 100, that relates to the offered skill sets as well as other selection criteria (such as geolocation, work schedule etc.) of the respective service provider 300 (maintenance crew). In other words, the client device registers (subscribes) with the service apparatus 100 and provides service provider specific information such as offered maintenance skill sets, work schedule and/or geolocation of the respective service provider 300 (maintenance crew) to the server apparatus 100.

In addition, the service provider can comprise one or more autonomously operating maintenance robots, that are associated (i.e. communicably connected) with the client device, and configured to provide maintenance services in relation to industrial assets according to the maintenance robots specified skill sets. The maintenance robot can be configured to either be registered (subscribed) with the server apparatus 100 via the client device or to register (subscribe) autonomously with the server apparatus 100 to provide service offer information autonomously.

In order to establish information exchange between the industrial assets 200, the server apparatus 100 and the one or more service providers 300 respectively, a communication network 400 can be utilized. The communication network 400 may, for example, comprise a telecommunications network. In particular, the communication network 400 may comprise a collection of terminal nodes and connected links so as to enable communication between the terminals. The nodes (industrial assets 200, server apparatus 100, service providers 300) can utilize circuit switching, message switching or packet switching to pass signals through corresponding links and nodes to reach the correct destination terminal. A (telecommunications) link is a communication channel that connects two or more communication devices. Such a link may be an actual physical link or it may be a logical link that uses one or more actual physical links. Specifically, a telecommunications link comprises one of several types of information transmission paths such as those provided by communication satellites, terrestrial radio communication infrastructure and computer networks to connect two or more points. Particular examples for communication networks are computer networks, wireless networks, the Internet and/or telephone networks.

Thus, when a respective industrial asset 200 detects that a specific maintenance service is required, the industrial asset 200 formulates and issues a service request message indicative of a service request via the communication network 400 to the server apparatus 100.

The service providers 300 can register (subscribe) with the server apparatus 100. Registration of a respective server providers 300 comprises provision of information relating to the specific services offered as well as other information (e.g. geolocation of the respective service provider 300) to the server apparatus 100.

The server apparatus 100 manages publication of service requests from respective industrial assets 200 in association with registration information (subscription) of registered service providers 300. In other words, the server apparatus 100 performs a filtering operation based upon predefined selection criteria in order to identify and select registered server providers 300 that are eligible to access information relating to the specific service requests issued by the respective industrial asset 200. Upon identification and selection of one or more service providers 300 matching the respective service request issued by the manufacturing asset 200, the service apparatus 100 conveys information relating to the respective service request to the selected service providers 300.

Subsequently to reception of the information relating to the service request of the manufacturing asset 200, the selected service providers 300 issue service offer messages directed towards the respective industrial asset 200. In other words, in response to reception of the respective industrial assets 200 service request, the selected service providers 300 contact the respective industrial asset 200 by sending a corresponding service offer information message via communication network 400, that comprises information relating to respective services offered as well as other information such as geolocation of the respective service provider 300.

Upon reception of the service offer information message, the industrial asset 200 can select the service offer issued by the service provider 300 that corresponds to a "best match" for the requested service, based on pre-defined selection criteria. For example, the predefined selection criteria can comprise a specified set of maintenance skills, minimum distance and/or minimal traveling time between the location of a respective industrial asset 200 and a location of the chosen service provider unit 300. Upon selection of the respective service provider 300, a confirmation message is conveyed via the communication network 400 to the selected service provider 300 indicative of accepting the offered service of the respective service provider 300. The confirmation message may be sent automatically by the service offer accepting industrial asset 200 or can be issued upon control of a client device that is associated with the respective industrial asset 200.

For example, the client device may be a computing device storing information in relation to the respective industrial asset 200 and configured to be communicably connectable to server apparatus 100 and service providers 300, respectively. For example, the industrial asset 200 can be an industrial manufacturing robot that detected a malfunction of one or more of its parts. Accordingly, the associated device can be an integrated computing device, i.e. being part of the industrial manufacturing robot, configured to comprise information relating to the maintenance state of the industrial manufacturing robot and further configured to convey information to the server apparatus 100 and/or the selected server provider 300, respectively.

Alternatively, the client device can be configured to be an external computing device (e.g. tablet computer or desktop computer) comprising information relating to required maintenance services of the industrial asset 200 and communicably connectable to the industrial manufacturing robot as well as the server apparatus 100 and service providers 300. Accordingly, issuance of service requests for the respective industrial asset 200 as well as acceptance of service offers by service providers 300 can be mediated via the client device (i.e. the external computing device). Accordingly, acceptance of service offers can be issued automatically (decided and executed by the computing device in relation to predetermined selection criteria) or upon confirmation of an operator associated with the respective industrial asset 200.

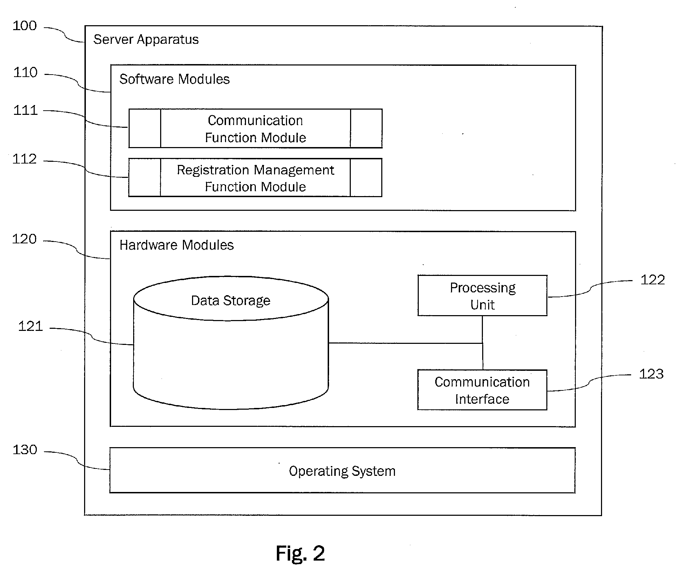

Figure 2 depicts schematically a block diagram of an exemplary embodiment of the server apparatus 100. The server apparatus 100 comprises software modules 110, hardware modules 120 and an operating system 130. The software modules 110 separate the functionality of a program to be executed on the server apparatus 100 into independent, interchangeable modules, such that each module contains everything necessary to execute only one aspect of the desired functionality. In particular, the server apparatus 100 comprises a communication function module 111 and a registration (subscription) management function module 112.

Moreover, on the hardware side, the server apparatus 100 also comprises a modular design comprising a variety of hardware modules 120 to enable easy displacement of parts that use standardized interfaces. Accordingly, upgrading and/or replacing certain aspects of the server apparatus are enabled without having to arrange for a completely new machine. In particular, the hardware modules 120 comprise a data storage 121, processing unit 122 and a communication interface 123.

The communication function module 111 handles all messages, received or sent by the communication interface 123. The communication interface 123 physically connects the server apparatus 100 to the communication network 400. The communication interface 123 can be an electronic circuit, usually designed to a specific standard, that enables one machine to telecommunicate with another machine. Accordingly, such a connection enables the server apparatus 100 to communicate with multiple industrial assets 200 and server providers 300 (or other associated devices). The communication can be realized in a wired or wireless manner. In addition, the communication function module 111 receives and channels messages (in particular, all messages from the industrial assets 200 and the service providers 300) towards registration management function module 112 (subscription management function module) for processing.

In the data storage 121, all tables of the server apparatus 100 are stored. Tables can have uses for both high-level specification and low-level implementation. In particular, tables are means of arranging data in a particular order (e.g. in rows and columns) for information processing.

The processing unit 122 performs all computation for all software modules 110 of the server apparatus 100. In addition, the operating system 130 as software is configured to control the underlying operation of the server apparatus 100. In particular, the operating system 130 is system software that manages the computer hardware (hardware modules 120) and software resources (software modules 110) and provides common services for the computer programs of the server apparatus 100.

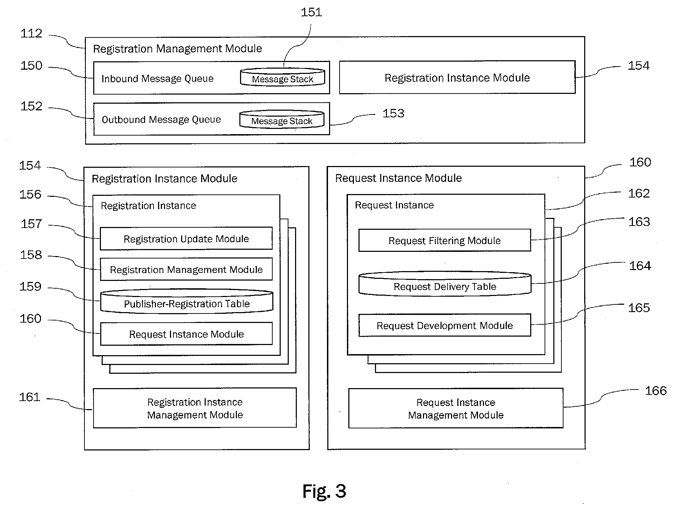

Figure 3 depicts a detailed block diagram of software modules comprised by the server apparatus 100 according to an exemplary embodiment. In particular, figure 3 depicts the registration management module 112 (subscription management module) with registration instance module 154 and request instant module 160 of the server apparatus 100.

Specifically, the registration management module 112 comprises an inbound message queue 150, an outbound message queue 152 and a registration instance module 154 (subscription instance module). In the inbound message queue 150 with its message stack 151, all inbound messages from the communication function module 111 are buffered. Messages are extracted from the message stack 151 in a first in, first out manner. Prioritization of inbound messages can be set within the message format. In the outbound message queue 152 with its message stack 153, all outbound messages, received from the registration instance module 154 are buffered and then forwarded towards the communication function module 111. Messages are extracted from the message stack 151 in a first in, first out manner. Prioritization of outbound messages is set by the registration instance module 154.

The service requests issued by an industrial asset 200 are distributed by the server apparatus 100 towards one or more respective service providers 300 in a publish/subscribe (registration) manner. In particular, an industrial asset 200 issues messages relating to service requests (service request messages) via communication network 400 to the server apparatus 100. Upon reception (at the server apparatus 100) of the service request messages, the server apparatus 100 utilizes the information associated with the respective service request to maintain service request management information. In other words, the server apparatus 100 creates publication streams relating to respective service requests issued by one or more industrial assets 200. Accordingly, service providers 300 may register with the server apparatus 100 in correspondence with issuance of a registration request message, that comprises information relating to one or more services provided by the respective service provider 300, as well as selection criteria associated with the respective service provider 300. In other words, service providers 300 are able to subscribe to the publication streams of the server apparatus 100 in order to be matched and receive service requests in accordance with selection criteria such as their offered services and their respective location. Accordingly, identification and selection as well as conveying of the respective service request information is performed by server apparatus 100. A service request can comprise the industrial assets 200 ID, its geolocation 200-A and a timestamp, at which the issued service request expires (i.e. a duration of validity for the issued service request).

Accordingly, the registration instance module 154 comprises registration instances 156 and a registration (subscription) instance management module 161. When a service provider 300 registers (subscribes) to one or more publication streams a registration or subscription instance 156 is created.

All registration instances 156 are handled as parallel processes forming service provider management information at the server apparatus 100. For each publication stream, created by a publisher, a registration instance 156 is created. All registration instances 156 are handled as parallel processes. The allocation of computer memory and reservation of computation time; instance initialization by setting of message filter parameters and connectivity details of industrial assets 200; and final release of computer memory is carried out by registration instance management module 161.

Each registration instance 156 comprises a registration update module 157, a registration management module 158, a publisher-registration table 159 and a request instance module 160. Whenever the details of a subscriber (registered service provider 300) are changed, the registration update module 157 will process that update. For example, updates can be constituted by: a service provider 300 that newly registers at the server apparatus 100 (subscribes for a publication streams), a service provider 300 sending an update of its geolocation 300-A, a service provider 300 that un-registers from the server apparatus 100 (unsubscribes from one or more publication streams provided by the server apparatus 100).

When a registration instance 156 is created by the registration instance management module 161, an initialization is realized by a sub- registration management module 158. This initialization sets the industrial asset 200, which created the publication stream at the server apparatus 100. Additional industrial assets 200 can be added to a registration instance 156 in order to bundle the publications from multiple industrial assets 200 in a publisher-registration table 159, the details of each publisher (industrial asset 200) and registering (subscribing) entity (service provider 300) of a registration instance 156 are stored. The details can include for the publishing party (industrial asset 200) the ID (identification), name (model), uniform resource identifier (URI), description of a detected maintenance need and last determined geolocation 200-A of the respective industrial asset 200. For the subscribing party (service provider 300) the details can include ID, name, URI, description of the offered services and last announced geolocation 300-A of the respective service provider 300. The provided information of publishing party and subscribing party are stored on the server apparatus 100, respectively.

The request instance module 160 comprises request instances 162 and a request instance management module 166. For each service request, shared by a subscription instance 156, a request instance 162 is created. All request instances 162 are handled as parallel processes. The resource allocation or computer memory for the of the Request Delivery Table 164; initialization of Request Filtering Module 163 and Request Development Module 165; and final resource computer memory release is carried out by request instance management module 166.

When the service apparatus 100 receives a service request termination message (i.e. a message indicating that the requested service is not required anymore and is to be terminated), the associated respective request instance 162 is identified by registration manage module 112 and terminated by request instance management module 166. When a service request expires (i.e. when the duration of validity of a respective service requests elapsed) the respective request instance 162 is terminated (i.e. canceled) by the registration management module 112. Accordingly, the industrial assets 200, which issued the service request is subsequently informed about the termination.

Each request instance 162 comprises a request filtering module 163, a request delivery table 164 and a request deployment module 165. The request filtering module 163 identifies each service provider 300 that registered with the server apparatus 100 (i.e. subscribed to a publication stream), whether it meets the requirements to receive the respective service request issued by an industrial asset 200 or not. The request delivery table 164 stores information relating to which service provider 300 received the service request of a particular request instance 162 and a timestamp of delivery.

The request filtering module 163 identifies those service providers 300, which are supposed to receive the service requests. In other words, the request filtering module 163 performs a filtering of whether a particular service provider 300 matches selection criteria enabling the respective service provider to receive the service requests. The identification is structured into a content stage and a geolocation stage.

In the content stage, the request filtering module 163 checks whether a service provider 300 is capable of providing countermeasures associated with error codes corresponding to maintenance needs of an industrial asset. Only those service requests are sent to the respective service provider 300, where provided countermeasures match one or more error codes indicative of a respective service need.

In the geolocation stage, a maximum service distance 300-B of the service provider 300 is calculated. A service distance can be defined as the distance between the geolocation 300-A of the service provider 300 and the geolocation 200-A of a respective industrial asset 200 that is requesting a particular service. Alternatively, a service distance may refer to an operational area or operational perimeter of a respective service provider 300.

In particular, geolocation 200-A of the industrial asset 200 as well as geolocation 300-A of a respective service provider 300 can be indicated in longitude and latitude-coordinates obtained from position determination devices. In order to take into account the curvature of the earth, a variety of mathematical tools from non-Euclidean geometry such as the Haversine formula can be employed. In order to determine the geolocation 200-A of the industrial asset 200 and the geolocation 300-A of the service provider 300, both, the industrial asset 200 as well as the service provider 300 can comprise global positioning navigation devices enabling an accurate position determination, respectively.

When the service distance between an industrial asset 200 and a service provider 300 is determined to be below a maximum service distance 300-B, the service request is conveyed to the respective service provider 300. Accordingly, the request deployment module 165 will generate the service request and push it into the outbound message queue 151 of the registration management module 112. Subsequently to conveying the service request to a respective service provider 300, the service provider ID will be comprised by the request delivery table 164. Accordingly, a further change of geolocation 300-A of the respective service provider 300 will not be considered for the conveyed service request anymore.

If a service provider 300 registers with the server apparatus 100 to access service request management information, i.e. subscribes to a publication stream provided by the server apparatus 100, the request filtering module 163 is executed. Accordingly, the entirety of service request management information is considered in the process of identifying and selecting a matching service provider 300. In other words, even service requests published before the subscription (registration) of the particular service provider 300, are considerate in the filtering process.

When the server apparatus 100 receives an update of a geolocation 300-A of a service provider 300 or a geolocation 200-A of an industrial asset 200, this newly obtained respective geolocation is stored in the publisher-registration table 159. Accordingly, this affects only those registration instances 156, where the service provider unit 300 is subscribed to (registered with) or which is published by the industrial asset 200. For any registration instance 156, where the publisher-registration table 159 has been updated, the request filtering module 163 of the request instance module 160 is executed.

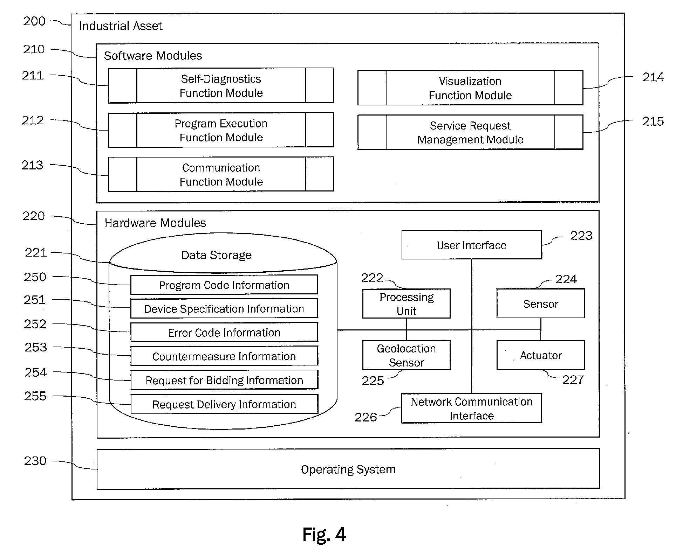

Figure 4 depicts a block diagram of an exemplary embodiment of an industrial asset 200. The industrial asset 200 comprises software modules 210, hardware modules 220 and an operating system 230. In particular, the software modules 210 of the industrial asset 200 comprise a self-diagnostic function module 211, a program execution function module 212, a communication function module 213, a visualization function model 214 and a service request management module 215.

The hardware modules 220 comprise a data storage 221, a processing unit 222, a user interface 223, a network communication interface 226, a geolocation sensor 225, one or more sensors 224 and one or more actuators 227. Tables within the data storage 221 comprise program code information 250, device specification information 251, error code information 252, countermeasure information 253, request for bidding information 254 and request delivery information 255.

In particular, the self-diagnostic function module 211 receives data from each sensor 224 of the industrial asset monitoring the operation of the respective industrial asset 200. In other words, the one or more sensors 224 are configured to provide information allowing a determination whether the industrial asset 200 functions within predefined boundaries of operation. Moreover, the device specification information 251 comprises details relating to the particular type of the industrial asset 200, the asset vendor as well as safety thresholds for each sensor 224 associated with the industrial asset 200. Accordingly, malfunction or a potential need for maintenance of the industrial asset can be detected via the sensors 224 and the information relating to the particular type of malfunction or maintenance is provided to the self-diagnostic function module 211.

With the program execution function module 212, the execution of code is realized. The program code is stored in the program code information table 250 and eventually executed by the actuators 227. The program code determines the use of the actuator 227, for example, as computer numeric control (CNC) program, and the local processing of data obtained from the sensor 224.

In order to evaluate the condition of the industrial asset 200, the measured values of the sensors 224 are continuously monitored and compared to predefined safety thresholds. These safety thresholds are comprised in the device specification information 251.

Whenever a value of at least one of the sensors 224 violates or exceeds the safety thresholds, the condition of the industrial asset 200 is recognized as being "in need for maintenance". In accordance with information obtained from sensors 224, an error code is extracted from error code information table 252. In accordance with the error code information, the countermeasure information table 253 is queried with the error code.

If available, information about valid countermeasures for the recognized condition of the industrial asset 200 is extracted from the countermeasure information table 253. Accordingly, the recognized condition (e.g. need for repair or overhaul) of the industrial asset 200, the error code and the countermeasure information are outputted via the user interface 223 towards a human operator of the industrial asset 200. The human operator has the option to dismiss the error. In case the human operator dismisses the error, the operating condition of the industrial asset 200 is reset to "not in need for maintenance". In addition, the human operator may perform recovery actions before dismissing the error. In case the human operator identifies an error code or condition of the industrial asset 200 that cannot be resolved without additional support, a service request relating to the determined maintenance need is issued. The details of the issued service request is stored in the request delivery information table 255.

Alternatively, the industrial asset 200 can be configured to issue a service request autonomously, i.e. without interference of a human operator, upon determination that the condition of the industrial assets 200 is determined to be "in need for maintenance".

The communication function module 213 handles all messages, received or sent by the network communication interface 226. The network communication interface 226 physically connects the industrial asset 200 to the communication network 400. The connection enables the industrial asset 200 to communicate with the server apparatus 100 and one or more service providers 300. Accordingly, the communication can be realized in a wired or wireless manner. A communication function module 213 channels all received messages towards the service requests management module 215 for processing. A particular service request is generated by the self-diagnostic function module 211 and send via the network communication interface 226 towards server apparatus 100.

The visualization function module 214 creates all visual outputs for indication for a human operator. This includes but is not limited to the current condition of the industrial asset 200, values of the sensors 224, values of the geolocation sensor 225 and information relating to send service request. Accordingly, the information created by the visualization function module 214 is visually outputted by user interface 223. For example, user interface 223 may comprise a display or screen for displaying of the information. In addition, the user interface 223 can enable a human operator to control the industrial asset 200. For this purpose the user interface 223 can comprise keys, soft-keys or a touch panel.

The service request management module 215 processes messages from respective service providers 300. The results are service offers from service providers 300 comprising information associated with service requests issued by the industrial asset 200. The details of each issued service request of the industrial asset 200 are stored in the request delivery information table 255. The service offers obtained in response to service requests are stored in the request for bidding information table 254.

In data storage 221, all tables of the industrial assets 200 are stored. The processing unit 222 performs all computations for all software modules 210 of the industrial assets 200. The operating system 230 controls the underlying operation of the industrial asset 200.

Accordingly, when the industrial asset 200 receives a service offer from a service provider 300 in response to a service request, this particular service offer is stored in the request for bidding information table 254. A human operator is informed via the user interface 223 about the newly arrived service offer. Subsequently, the service offer can be accepted by the human operator. If the service offer is accepted, the service request management module 215 will create a service request termination message, which is send via the network communication interface 226 to the server apparatus 100.

Alternatively, the industrial asset 200 can be configured to autonomously accept the service offer and to create a service request termination message that is sent to the service apparatus 100.

When the industrial asset 200 publishes service requests and one or more publication streams, i.e. upon issuing of a service request message to the server apparatus 100, which adds the obtained information to the service request management information, the service requests management module 215 can be configured to acquire continuously the geolocation 200-A of the industrial asset 200 from a geolocation sensor 225. Subsequently, the determined geolocation 200-A is sent via the network interface 324 and the communication network 400 to the server apparatus 100. Accordingly, at the server apparatus 100, the registration update module 157 of each publication stream (subscription instance 156), where the industrial asset 200 publishes service requests to, updates the geolocation 200-A of the industrial asset 200 in the publisher-registration table 159. The frequency, in which the geolocation 200-A is acquired can be set by a human operator via the user interface 223 or can be set automatically according to predetermined frequency parameters.

Upon expiry of a respective service request, the industrial asset 200 receives, from the server apparatus 100, a service request termination message. A human operator can be informed about the service request termination message via user interface 223. If one or more service offers have been received for the expired service requests, the human operator can select one respective service offer. Alternatively, the industrial asset 200 can be configured to autonomously select a respective service offer. The respective service provider 300 is subsequently contacted via the communication network 400 about the selection.

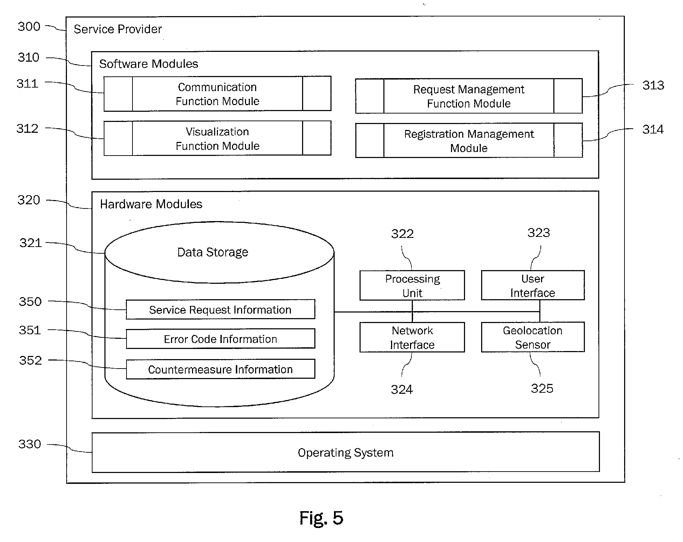

Figure 5 depicts a block diagram of an exemplary embodiment of a service provider 300 comprising software modules 310, hardware modules 320 and an operating system 330. In particular, the software modules 310 comprise a communication function module 311, a visualization function module 312, a request management function module 313 and a subscription management module 314. The hardware modules 320 comprise a data storage 321, a processing unit 322, a user interface 323, a network interface 324 and a geolocation sensor 325. Data storage 321 comprises all tables of the service provider 300. In particular, the data storage 321 comprises a recovery request information table 350, an error code information table 351 and a countermeasure information table 352. The processing unit 322 performs all computations for all software modules 310 of the service provider 300. Accordingly, the operating system 330 comprises software controlling the underlying operation of the service provider 300.

The visualization function module 312 can create or visual outputs for human operators. This includes but is not limited to the current condition of the service provider 300, values of the geolocation sensor 325, information relating to received service requests as well as information relating to send service offers in response to received service requests. The information created by the visualization function module 312 is visually outputted by the user interface 323. In addition, the user interface 323 can enable a human operator to control the service provider 300 or to convey information, when the service provider is or is associated with, for example, an industrial maintenance robot or a maintenance crew, respectively. For this purpose, the user interface 323 can comprise keys, soft-keys or a touch panel for service provider control.

Alternatively, the service provider can be configured to autonomously control its operations based upon predefined control parameters.

A human operator can specify the capabilities of the service provider 300 by selecting valid error codes and corresponding countermeasures. All valid error codes are stored in the error code information table 351 and all valid countermeasures are stored in the countermeasure information table 352. In addition, the human operator can set a maximum service distance 300-B.

For example, when the service provider is a maintenance crew on a factory side, the error code information table 351 can be comprised by a portable computing device associated with the respective maintenance crew. In fact, when the service provider 300 is a maintenance crew on a factory side such a portable computing device can comprise all necessary information for matching the server provider 300 with a service request issuing industrial asset 200. Accordingly, the portable computing device also establishes a communication connection with the server apparatus 100 and the industrial asset 200, respectively. In addition, information relating , for example, to a maximum service distance 300-B can be provided by members of the maintenance crew to the portable computing device, which can be configured to direct the information towards server apparatus 100 and/or industrial asset 200, respectively.

However, specification of service provider capabilities, in particular selection of valid error codes and valid countermeasures can also be performed autonomously by the server provider 300. For example, when the service provider 300 is an autonomously operating industrial maintenance robot communicably connectable to the server apparatus 100 and an industrial asset 200, automatic autonomously operation of the industrial maintenance robot can be enabled. In particular, the industrial maintenance robot may autonomously register (subscribe) with the server apparatus 100 and provide, upon selection by the server apparatus, respective service offers to a respective industrial asset 200.

The subscription management module 314 manages all functions, required to discover, register and un-register to the server apparatus 100 (i.e. subscribe and unsubscribe to publication streams). In order to discover publication streams (corresponding to a particular service request management information), the registration management module 314 creates a discovery request. The information comprised in the discovery request can include the ID of the service provider 300. The discovery request is sent via the network interface 324 and the communication network 400 to the server apparatus 100. The registration instance module 154 of the service provider 300 generates a list of valid publication streams (i.e. pending service requests). The details of their publication streams are stored in the subscription instances 156. The list of valid publication streams (i.e. pending service requests) is sent to the service provider 300 and can be displayed via the user interface 323 to a human operator. Subsequently, a human operator can select between zero, one or up to all publication streams for subscription by setting of boundary parameters. In other words, the extent of service request management information can be set in a targeted manner. Alternatively, the extent of accessed service request management information at the server apparatus 100 can be chosen automatically in accordance with predefined boundary parameters indicating the specifics of particular service requests stemming from respective industrial assets 200.

The subscription message can include the ID of the service provider 300, the current geolocation 300-A of the service provider 300 and the maximum service distance 300-B. The current geolocation 300-A can be acquired by a geolocation sensor 325.

When the service provider 300 is subscribed to one or more publication streams (i.e. is registered with the server apparatus 100 and capable of receiving specific service request information messages), the request management function module 313 can acquire continuously the geolocation 300-A of the service provider 300. The geolocation 300-A is sent via the network interface 324 and the communication network 400 to the server apparatus 100. The registration update module 157 of each publication stream (subscription instances 156) to which the service provider 300 is subscribed to, updates the geolocation 300-A in the publisher-registration table 159. The frequency, in which the geolocation 300-A is acquired, can be set by a human operator via the user interface 323 or performed automatically according to a predefined parameter.

Accordingly, via the subscription management module 314, a human operator can request from the server apparatus 100 a registration request. The registration request is a list of all publication streams the particular service provider 300 is subscribed to at the server apparatus 100. The subscription request is sent via the network interface 324 and the communication network 400 to the server apparatus 100. Accordingly, the service provider sends a registration request message associated with the service provider 300 to the server apparatus 100, the registration request message being indicative of one or more services provided by the service provider 300 and one or more selection criteria associated with the service provider 300. In addition, the registration request message is associated with instructions or information according to which specific subsets of the service request management information are to be considered when matching service request and offered services. This includes the current location of the service provider 300 and maximum distance to a potential industrial asset 200 issuing a service request to the server apparatus 100. Accordingly, the service provider 300 is added to the publisher-registration table 159 of the registration instances 156 by the registration management module 158.

Accordingly, the registration instance module 154 of the service provider 300 generates a list of all publication streams (specific subset of service request management information) the service provider 300 is subscribed to. The list of subscribe publication streams is sent to the service provider 300 and displayed via the user interface 323 to a human operator. The human operator can select from zero to all publication streams for un-registration.

The un-registering (unsubscribing) request is created by the registration management module 313 and can comprise the ID of the service provider 300 and a publication stream ID (i.e. a classification number of the specific subsets of the service request management information). The un-registering request is sent via the network interface 324 and the communication network 400 to the server apparatus 100. The registration instance module 154 removes the service provider 300 from the publisher-registration table 159 of the respective registration instance 156.

When the service provider 300 receives a service request, this service request can be displayed via the user interface 323 to a human operator. The human operator has the option to place a service offer or dismiss the service request. The user interface 323 can be part of a computing device associated with the respective service provider 300. In particular, when the service provider 300 comprises a maintenance crew on a factory side a (mobile) computing device (e.g. a tablet computer) may comprise the user interface 323. Accordingly, the computing device can comprise the above mentioned software modules 310 and hardware modules 320. Consequently, via the computing device, the maintenance crew is enabled to register with the server apparatus 100, to be matched with respective service requests and to offer corresponding service offers in response.

The service offer can include the ID of the service provider 300 and conditions of service (e.g. traveling time to the respective industrial asset 200, specific maintenance skill set, earliest possible starting time of maintenance service or cost for service). The request management function module 313 generates the service offer comprising information specifying the service and service conditions and sends it via the network interface 324 and the communication network 400 to the server apparatus 100. The communication network 400 can be realized as either wired Ethernet or a wireless local area network (LAN).

Alternatively, upon reception of a service request the service provider 300 can automatically issue a corresponding service offer comprising the ID of the service provider 300 and conditions of service. For example, when the service provider comprises an automatic maintenance robot comprising software modules 310 and hardware modules 320, registration (subscription) with the server apparatus 100 as well as provision of service offers in response to received service requests from industrial assets 200, can be performed automatically by the automatic maintenance robot.

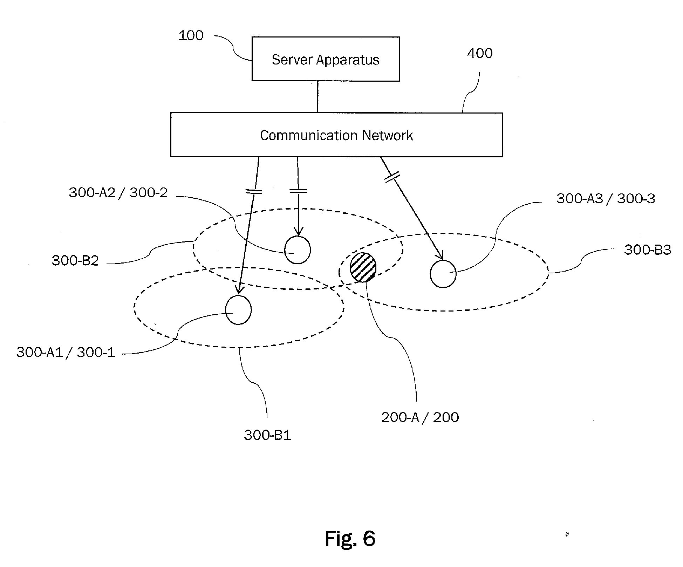

Figure 6 depicts schematically a situation for message delivery/distribution based on geolocation. In particular, industrial asset 200 is depicted at a determined geolocation 200-A. In addition, three service providers (300-1, 300-2, 300-3) with respective different geolocations (300-A1, 300-A2, 300-A3) are depicted. Maximum service distances (300-B1, 300-B2, 300-B3) of the respective service providers (300-1, 300-2, 300-3) are indicated by the respective dashed circular lines. Accordingly, a perimeter (maximum service distance) is indicated, wherein each of the respective service providers (300-1, 300-2, 300-3) is enabled to operate, respectively. Accordingly, when the industrial asset 200 is located within the operation perimeter of a respective service provider 300-1, 300-2, 300-3), a service requests issued by the industrial asset 200 is conveyed via communication network 400 and server apparatus 100 to the respective service provider (300-1, 300-2, 300-3). In the depicted situation of figure 6, the geolocation of the industrial asset 200 lies within the perimeters of the two respective geolocations of service providers 300-2 and 300-3. Accordingly, based on geolocation selection criteria, a service request issued by the industrial asset 200 can be made accessible by the server apparatus 100 to the two respective service providers 300-2 and 300-3.

As will be appreciated by one of skill in the art, aspects and exemplary embodiments, as described hereinabove and in connection with the accompanying figures, may be embodied as a method (e.g., a computer-implemented process), apparatus (including a device, machine, system, computer program product, and/or any other apparatus), or a combination of the foregoing. Embodiments of the present invention may take the form of a computer program product on a computer-readable medium having computer-executable program code embodied in the medium.

Embodiments are described exemplarily hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, generate means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the invention.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages generated, transmitted, received, stored, and/or processed by the device), and such messages may be conveyed by a communication network or medium.

It should also be noted that logic flows may be described herein to demonstrate various aspects of the invention, and should not be construed to limit the present invention to any particular logic flow or logic implementation. The described logic may be partitioned into different logic blocks (e.g., programs, modules, functions, or subroutines) without changing the overall results or otherwise departing from the true scope of the invention.

The present invention may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present invention may be written in an object oriented, scripted or unscripted programming language such as Java, Perl, Smalltalk, C++, or the like. However, the computer program code for carrying out operations of embodiments of the present invention may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the invention may be implemented as a combination of both software (e.g., a computer program product) and hardware. Still other embodiments of the invention are implemented as entirely hardware, or entirely software.

While certain exemplary embodiments have been described and shown in the accompanying drawings, it is to be understood that such embodiments are merely illustrative of and are not restrictive on the broad invention, and that the embodiments of invention are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured without departing from the scope and spirit of the invention. Therefore, it is to be understood that, within the scope of the appended claims, the invention may be practiced other than as specifically described herein. For example, unless expressly stated otherwise, the steps of processes described herein may be performed in orders different from those described herein and one or more steps may be combined, split, or performed simultaneously.

## Claims

1. A server apparatus for distribution of service requests associated with maintenance services required for maintenance of industrial assets,
the server apparatus being configured to:
- maintain service request management information indicative of a plurality of pending service requests, each pending service request requesting a respective maintenance service required at a respective industrial asset based on a service request message previously received at the server apparatus, and
- maintain service provider management information indicative of a plurality of registered service providers, each service provider providing one or more service offers associated with maintenance services for industrial assets,
wherein, when receiving a registration request message associated with a service provider not yet indicated in the service provider management information, the server apparatus is further configured to:
- identify, among the plurality of pending service requests, one or more service requests matching one or more service offers associated with maintenance services for industrial assets provided by the respective service provider,
- select, among the one or more identified service requests, one or more service requests based on whether the respective identified service request satisfies one or more selection criteria associated with the respective service provider, the one or more selection criteria being indicated in selection criteria information included in the received registration request associated with the respective service provider, and
- send a corresponding service request information message indicative of the one or more selected service requests to the respective service provider.

2. The server apparatus according to claim 1, **characterized in that**
the maintained service request management information indicates, for each pending service request, location information indicative of a location of the respective industrial asset associated with the respective service request,
the one or more selection criteria indicated in selection criteria information include a pre-determined location condition, and
the server apparatus is configured to select, among the one or more identified service requests, the one or more service requests which are associated with industrial assets at locations which satisfy the pre-determined location condition.

3. The server apparatus according to claim 1 or 2, **characterized in that**,
when receiving the registration request message associated with the service provider not yet indicated in the service provider management information, the server apparatus is further configured to update the maintained service provider management information to additionally indicate the respective service provider.

4. The server apparatus according to at least one of the preceding claims, **characterized in that**, when receiving an update request message associated with a registered service provider, the server apparatus is further configured to update the maintained service provider management information based on update information indicated in the received update request message.

5. The server apparatus according to at least one of the preceding claims, **characterized in that**, when receiving a registration cancelation request message associated with a registered service provider, the server apparatus is further configured to cancel the registration of the respective service provider and/or to update the maintained service provider management information, in particular including removing information associated with the respective service provider and/or indicating that the registration of the respective service provider is cancelled.

6. The server apparatus according to at least one of the preceding claims, **characterized in that**,
when receiving a service request message indicative of a new service request requesting a respective maintenance service required at a respective industrial asset, the server apparatus is configured to:
- identify, among the plurality of registered service providers, one or more service providers which provide a respective service offer matching the new service request,
- select, among the one or more identified service providers, one or more service providers based whether the new service request satisfies one or more selection criteria associated with the respective service provider,
- send a corresponding service request information message indicative of the new service request to each of the selected service providers.

7. The server apparatus according to claim 6, **characterized in that**
the received service request message indicates location information indicative of a location of the respective industrial asset associated with the new service request,
the one or more selection criteria indicated in selection criteria information include, for each of the registered service providers, a respective pre-determined location condition, and
the server apparatus is configured to select, among the one or more identified service providers, the one or more service providers for which a location of the industrial asset associated with the new service request satisfies the respective pre-determined location condition.

8. The server apparatus according to claim 6 or 7, **characterized in that**,
when receiving the service request message indicative of the new service request, the server apparatus is further configured to update the maintained service request management information to additionally indicate the new service request.

9. The server apparatus according to at least one of the claims 6 to 8, **characterized in that**, when receiving an update request message associated with a pending service request, the server apparatus is further configured to update the maintained service request management information based on update information indicated in the received update request message.

10. The server apparatus according to at least one of the claims 6 to 9, **characterized in that**, when receiving a service request termination message associated with a pending service request, the server apparatus is further configured to terminate the respective service request and/or to update the maintained service request management information, in particular including removing information associated with the respective service request from the maintained service request management information and/or indicating that the respective service request is expired.

11. The server apparatus according to at least one of the claims 6 to 10, **characterized in that**
the received service request message is indicative of an expiry time of the respective service request and/or the maintained service request management information indicates a respective expiry time for each pending service request, and
the server apparatus is further configured to remove information associated with pending service requests from the maintained service request management information at their respective expiry times and/or to terminate service requests at their respective expiry times, and to send service request termination messages associated with expired service requests to a client device associated with the respective associated industrial assets.

12. A service requesting apparatus communicably connectable to the server apparatus according to at least one of the preceding claims,
the service requesting apparatus being configured to:
- determine whether a maintenance service is required at an industrial asset among one or more industrial assets associated with the service requesting apparatus, and
- send a service request message to the server apparatus when it is determined that a respective maintenance service is required at a respective industrial asset associated with the service requesting apparatus,
wherein the service request message is indicative of a service request requesting the respective maintenance service required at the respective industrial asset, the service request message including at least one of service information indicative of the required maintenance service, location information indicative of a location associated with the respective industrial asset, type information indicative of a type of the respective industrial asset, identification information indicative of an identification number of the respective industrial asset, and expiry time information indicative of an expiry time of the respective service request.

13. A service provider apparatus communicably connectable to the server apparatus according to at least one of the claims 1 to 11 and one or more service requesting apparatuses according to claim 12,
the service providing apparatus being associated with one or more service providers providing one or more service offers associated with maintenance services for industrial assets and the service providing apparatus being configured to:
- send a registration request message associated with one of the associated service providers to the server apparatus, the registration request message being indicative of one or more services provided by the respective service provider and one or more selection criteria associated with the respective service provider,
- receive a service request information message indicative of one or more service requests from the server apparatus, and
- send a service offer information message to the service requesting apparatuses being associated with the one or more service requests indicated in the received service request information message.

14. A method for distribution of service requests associated with maintenance services required for maintenance of industrial assets, the method comprising:
- maintaining service request management information indicative of a plurality of pending service requests, each pending service request requesting a respective maintenance service required at a respective industrial asset based on a previously received service request message, and
- maintaining service provider management information indicative of a plurality of registered service providers, each service provider providing one or more service offers associated with maintenance services for industrial assets,
wherein, when receiving a registration request message associated with a service provider not yet indicated in the service provider management information, the method further comprises:
- identifying, among the plurality of pending service requests, one or more service requests matching one or more service offers associated with maintenance services for industrial assets provided by the respective service provider,
- selecting, among the one or more identified service requests, one or more service requests based on whether the respective identified service request satisfies one or more selection criteria associated with the respective service provider, the one or more selection criteria being indicated in selection criteria information included in the received registration request associated with the respective service provider, and
- sending a corresponding service request information message indicative of the one or more selected service requests to the respective service provider.

15. A computer program comprising computer-readable instructions, which when being run on a computer, causes the computer to execute steps of the method for distribution of service requests associated with maintenance services required for maintenance of industrial assets according to claim 14.

## Amended claims

### Amended claims in accordance with Rule 137(2) EPC.

1. A server apparatus for distribution of service requests associated with maintenance services required for maintenance of industrial assets,
the server apparatus being configured to:
- maintain service request management Information indicative of a plurality of pending service requests via a generation of publication streams relating to respective pending service requests issued by one or more Industrial assets, each pending service request requesting a respective maintenance service required at a respective Industrial asset based on a service request message previously received at the server apparatus, and
- maintain service provider management information Indicative of a plurality of registered service providers, each service provider providing one or more service offers associated with maintenance services for industrial assets,
wherein, when receiving a registration request message associated with a service provider not yet indicated in the service provider management information, the server apparatus is further configured to:
- identify, among the plurality of pending service requests, one or more service requests matching one or more service offers associated with maintenance services for industrial assets provided by the respective service provider,
- select, among the one or more identified service requests, one or more service requests based on whether the respective Identified service request satisfies selection criteria associated with the respective service provider, the selection criteria being based on a determination whether a respective service provider is capable of providing countermeasures associated with error codes corresponding to maintenance needs of a respective industrial asset and a determination of a maximum service distance of the respective service provider taking Into account a non-Euclidean distance between a location of the respective industrial asset and a respective service provider and indicated in selection criteria information Included in the received registration request associated with the respective service provider, and
- send a corresponding service request information message indicative of the one or more selected service requests to the respective service provider, wherein
when receiving a registration cancelation request message associated with a registered service provider, the server apparatus is further configured to cancel the registration of the respective service provider and/or to update the maintained service provider management information, in particular including removing information associated with the respective service provider and/or indicating that the registration of the respective service provider is cancelled.

2. The server apparatus according to claim 1, **characterized in that**,
when receiving the registration request message associated with the service provider not yet indicated in the service provider management information, the server apparatus is further configured to update the maintained service provider management information to additionally indicate the respective service provider.

3. The server apparatus according to at least one of the preceding claims, **characterized in that**, when receiving an update request message associated with a registered service provider, the server apparatus is further configured to update the maintained service provider management information based on update information indicated in the received update request message.

4. The server apparatus according to at least one of the preceding claims, **characterized in that**,
when receiving a service request message indicative of a new service request requesting a respective maintenance service required at a respective industrial asset, the server apparatus is configured to:
- identify, among the plurality of registered service providers, one or more service providers which provide a respective service offer matching the new service request,
- select, among the one or more identified service providers, one or more service providers based whether the new service request satisfies one or more selection criteria associated with the respective service provider,
- send a corresponding service request Information message indicative of the new service request to each of the selected service providers.

5. The server apparatus according to claim 4, **characterized in that**
the received service request message indicates location information indicative of a location of the respective industrial asset associated with the new service request,
the one or more selection criteria indicated in selection criteria information include, for each of the registered service providers, a respective pre-determined location condition, and
the server apparatus is configured to select, among the one or more identified service providers, the one or more service providers for which a location of the industrial asset associated with the new service request satisfies the respective pre-determined location condition.

6. The server apparatus according to claim 4 or 5, **characterized in that**,
when receiving the service request message Indicative of the new service request, the server apparatus is further configured to update the maintained service request management information to additionally indicate the new service request.

7. The server apparatus according to at least one of the claims4 to 6, **characterized in that**, when receiving an update request message associated with a pending service request, the server apparatus is further configured to update the maintained service request management information based on update information indicated in the received update request message.

8. The server apparatus according to at least one of the claims4 to 7, **characterized in that**, when receiving a service request termination message associated with a pending service request, the server apparatus is further configured to terminate the respective service request and/or to update the maintained service request management information, in particular including removing Information associated with the respective service request from the maintained service request management information and/or indicating that the respective service request is expired.

9. The server apparatus according to at least one of the claims 4 to 8, **characterized in that**
the received service request message is indicative of an expiry time of the respective service request and/or the maintained service request management information indicates a respective expiry time for each pending service request, and
the server apparatus is further configured to remove information associated with pending service requests from the maintained service request management information at their respective expiry times and/or to terminate service requests at their respective expiry times, and to send service request termination messages associated with expired service requests to a client device associated with the respective associated industrial assets.

10. A service requesting apparatus communicably connectable to the server apparatus according to at least one of the preceding claims,
the service requesting apparatus being configured to:
- determine whether a maintenance service is required at an industrial asset among one or more industrial assets associated with the service requesting apparatus, and
- send a service request message to the server apparatus when it is determined that a respective maintenance service is required at a respective industrial asset associated with the service requesting apparatus,
wherein the service request message is indicative of a service request requesting the respective maintenance service required at the respective industrial asset, the service request message including at least one of service information indicative of the required maintenance service, location information indicative of a location associated with the respective industrial asset, type information indicative of a type of the respective industrial asset, identification information indicative of an identification number of the respective industrial asset, and expiry time information indicative of an expiry time of the respective service request.

11. A service provider apparatus communicably connectable to the server apparatus according to at least one of the claims 1 to 9 and one or more service requesting apparatuses according to claim 10,
the service providing apparatus being associated with one or more service providers providing one or more service offers associated with maintenance services for industrial assets and the service providing apparatus being configured to:
- send a registration request message associated with one of the associated service providers to the server apparatus, the registration request message being Indicative of one or more services provided by the respective service provider and one or more selection criteria associated with the respective service provider,
- receive a service request information message indicative of one or more service requests from the server apparatus, and
- send a service offer information message to the service requesting apparatuses being associated with the one or more service requests indicated in the received service request information message.

12. A method for distribution of service requests associated with maintenance services required for maintenance of industrial assets, the method comprising:
- maintaining service request management information indicative of a plurality of pending service requests via publication streams relating to respective pending service requests issued by one or more industrial assets, each pending service request requesting a respective maintenance service required at a respective industrial asset based on a previously received service request message, and
- maintaining service provider management information indicative of a plurality of registered service providers, each service provider providing one or more service offers associated with maintenance services for industrial assets,
wherein, when receiving a registration request message associated with a service provider not yet indicated in the service provider management information, the method further comprises:
- identifying, among the plurality of pending service requests, one or more service requests matching one or more service offers associated with maintenance services for industrial assets provided by the respective service provider,
- selecting, among the one or more identified service requests, one or more service requests based on whether the respective identified service request satisfies selection criteria associated with the respective service provider, the selection criteria being based on a determination whether a respective service provider is capable of providing countermeasures associated with error codes corresponding to maintenance needs of a respective industrial asset and a determination of a maximum service distance of the respective service provider taking into account a non-Euclidean distance between a location of the respective industrial asset and a respective service provider and indicated in selection criteria information included in the received registration request associated with the respective service provider, and
- sending a corresponding service request Information message indicative of the one or more selected service requests to the respective service provider, wherein
when receiving a registration cancelation request message associated with a registered service provider, the registration of the respective service provider is cancelled and/or the maintained service provider management information is updated, in particular including removal of information associated with the respective service provider and/or indication that the registration of the respective service provider is cancelled.

13. A computer program comprising computer-readable instructions, which when being run on a computer, causes the computer to execute steps of the method for distribution of service requests associated with maintenance services required for maintenance of industrial assets according to claim12,
